# EUROPEAN PATENT SPECIFICATION

(11) **EP 1 481 564 B1**
(45) Date of publication and mention of the grant of the patent: **12.07.2017**
(21) Application number: 03743653.2
(22) Date of filing: 24.02.2003
(51) Int. Cl.: H04W 4/22

(54) **METHOD, SYSTEM, RADIO DEVICE, COMPUTER PROGRAM AND SIM-CARD FOR ALARM PATH MONITORING**
VERFAHREN, SYSTEM, FUNKGERÄT, COMPUTERPROGRAMM UND SIM-KARTE ZUR ALARMWEGÜBERWACHUNG
PROCEDE, SYSTEME, DISPOSITIF RADIO, PROGRAMME INFORMATIQUE ET CARTE SIM POUR SURVEILLANCE DE CHEMIN D'ALARME

(30) Priority: 01.03.2002 SE 0200639
(43) Date of publication of application: 01.12.2004
(73) Proprietor: Multicom Security AB, 117 43 Stockholm (SE)
(72) Inventor: HÖGDAHL, Johan, S-186 32 Vallentuna (SE); SALONEN, Jarmo, S-194 41 Upplands Väsby (SE); PETTERSSON, Per-Arne, S-136 68 Haninge (SE); ENBLOM, Börje, S-135 60 Tyresö (SE)
(74) Representative: Brann AB
(86) International application number: PCT/SE2003/000288
(87) International publication number: WO 2003/075588

(56) References cited:
- WO-A1-02/09465
- WO-A1-99/28884
- DE-A1- 10 033 335
- US-A- 5 432 841
- US-A- 6 067 018

## Description

### TECHNICAL FIELD

The present invention relates to monitoring of alarm path in a data and radio telecommunication network. More specific, the invention relates to a method, system and computer program means/application for monitoring an alarm path between a radio device and an alarm server for alarm path monitoring. The invention also relates to a radio device and a subscriber identification module, SIM-card.

### BACKGROUND OF THE INVENTION

Systems for supervision of mobile objects are today of frequent occurrence. By WO A1 98/10538, for instance a system to find/appoint the position of mobile units is known. To get an accurate position as possible, signals from base stations from a plurality of operators are utilized in this system. Further, the status of the mobile units can be polled and alarm can be transmitted if an object is moving outside an in advance determined area. Further, FR,A1,2756083 announces a system for supervision of mobile units by means of GSM (GSM, Global System for Mobile Communications), and by DE,A1,19733579 a system is known where position data obtained by means of for instance GPS (GPS, Global Positioning System) are transmitted from a mobile unit by means of GSM or other type of radio communication to a remotely/at a distance located control unit. WO9928884 discloses a card or a method for executing on a terminal at least one procedure based on a special application, especially in a traffic telematics service, providing simple, flexible and economical access to special applications, especially traffic telematics service applications. The procedure is executed fully or partially as a program in a mobile radiotelephone network subscriber identification card, said program being stored fully or partially on the mobile radiotelephone identification card, SIM card. WO A1 02/09465 teaches an arrangement in a mobile communication system for transmitting an information signal from a mobile telephone or other unit having similar capabilities, to an optional communication system such as an internet system and in that case to a predetermined information unit. The information unit triggers an indication in the absence of information signal. FR2787661 discloses a supervision and surveillance technique that uses automatic processing with a mobile phone. There is a specific integrated circuit in the mobile phone providing an automatic interface with the surveillance and supervision system. The digital words in the integrated circuit can be modified dynamically. The remote supervision and surveillance technique has a mobile telephone with a highly integrated circuit. The integrated circuit allows monitoring and supervision of surveillance circuits. The circuits can be used to set a car alarm, set the telephone to ring when the car alarm is triggered and to transmit an alarm for instance. The functions are adaptable and programmable. Regarding systems for supervision of mobile units and communication systems we also want to refer to US,A,5,969,595; US,A,4,990,890; EP,A2,921511; JP,A,63-283239; US,A,5,465,388; WO,A2,98/48576; US,A,5,742,904; US,A,5,890,061; US,A,5,880,868; AU,A,9656035 and WO,A1,99/41723.

### BRIEF DESCRIPTION OF THE INVENTION

A problem with the supervision systems of today, however, is that they do not monitor the alarm path between a radio device and the alarm operator. One object of the present invention is to solve that problem.

Another problem arise when the original alarm path between a supervised object and an alarm receiving centre is broken, a new alarm path is necessary. Consequently, another object of the present invention is to solve this problem.

Yet another problem is how to adapt a radio device and an alarm server to operate together. One object of the invention is to address this problem.

Users, such as common people, do not want an invention that is complicated to install and causes a lot of problems and trouble during installation and operation. Therefore, it is an object of the present invention to provide a solution that is easily implemented into an existing radio device, is easy to handle by a user and provides a reliable operation.

Another problem arise when the original communication connection or communication link does no longer exist and an alarm and position indications or position information cannot be transmitted. Even this is an object of the invention to solve.

It is also a problem addressed by the present invention to increase the availability and reliability, if one used network does not cover a certain area or location, but another network and operator does cover that area.

One aspect of the present invention is a method for monitoring an alarm path between a radio device and an alarm server for alarm path monitoring, according to claim 1. Further, one aspect of the present invention is a computer program means for monitoring an alarm path between a radio device and an alarm server for alarm path monitoring, said means being directly loadable into the internal memory storage of a digital processing unit within the radio device, said means comprises the software code elements for performing the steps of the claimed method.

Still another aspect of the invention is a computer program means that it is stored on a computer usable medium, comprising readable program code for causing a digital processing unit in a radio device to control an execution of the steps of the claimed method. Yet another aspects of the present invention is a system for monitoring an alarm path between a radio device and an alarm server.

Further one aspect of the present invention is a radio device having a subscriber identifying module, so called SIM-card, on which the invented computer program means is stored.

Further one aspect of the present invention is an SIM-card for alarm path monitoring.

One advantage by storing this invented service on a SIM Tool Kit (STK) supported module, like a SIM card, is that the service will be independent of the radio device manufacturers.

There is no need for additional hardware equipment to get the invented application working. Connection interfaces for specific applications of the invention has to be designed by the hardware manufacturer.

The availability and reliability of the invented application is increased as the SIM-card permit the use of different Public Mobile Land Networks (PLMN) and operators. If one network does not cover a certain area or location, another network and operator permitted by the SIM-card is automatically used.

Another advantage is that STK provides proper cipher algorithm and authentication method and usage of security strategies capabilities. Therefore, the security strategies possible will be flexible and adaptable.

### BRIEF DESCRIPTION OF THE DRAWINGS

The system according to the present invention will be described in more detail with reference to a drawing, in which:
Fig. 1 shows an exemplifying embodiment of the system according to the invention;
Fig. 2 is a signal/ message flowchart illustrating the function and method steps of an embodiment of the invention working in a first mode;
Fig. 3 is a signal/message flowchart illustrating the function and method steps of further one embodiment of the invention working in a second mode;
Fig. 4 is a block diagram showing a general architecture of a Subscriber Identity Module (SIM) card.

### DETAILED DESCRIPTION OF THE INVENTION

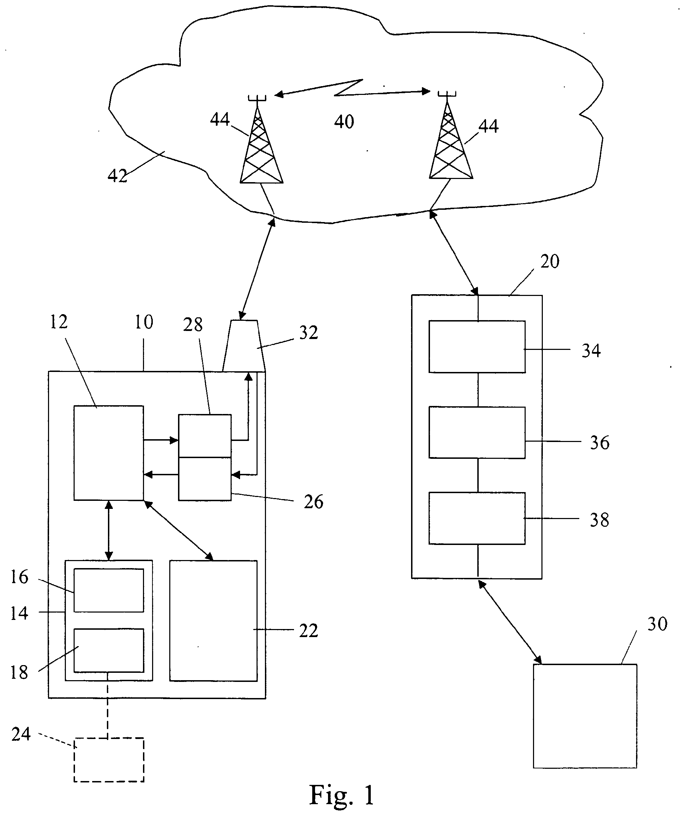

Fig. 1 is a block diagram illustrating a first embodiment of the present invention for monitoring an alarm path between a radio device and an alarm server for alarm path monitoring.

The invented method involves the step of running, either a copy from a storage 14 or run the program from the storage 14, a computer program means 16 for monitoring the alarm path between a radio device 10 and an alarm server 20. Said means 16 is stored on said module 14 as a computer program code that is readable by a digital processing unit 12 of said radio device 10. Said computer program means 16 includes coded instructions making it possible for the radio device 10 by means of the digital processing unit 12 to communicate open path verifications, like poll or acknowledgement, to the alarm server 20 at predetermined time intervals, for example to meet the requirements of the standard SS-EN50136-1-1. The poll frequency or time interval is configurable and possible to set within an interval between one poll or acknowledgement every 10 second, and one poll or acknowledgement per day.

Said invention is implemented as a computer program means 16 for monitoring an alarm path 40 between a radio device 10 and an alarm server 20 that is intended for alarm path monitoring, said means 16 being directly loadable into the internal memory storage of a digital processing unit 12 within the radio device 10. Said means 16 comprises the software code elements for performing the steps of any claims 1-7.

The computer program means 16 is a software application, that may be stored on a computer usable medium 14, comprising readable program for causing a digital processing unit 12 in a radio device 10 to control an execution of the steps of any of the claims 1-7.

A particularly interesting computer usable medium 14 is a subscriber identification module (SIM), commonly called an SIM-card. In order to distinguish an ordinary SIM-card from an SIM-card comprising the invented computer program means 16 for monitoring an alarm path 40, an SIM-card comprising the invented computer program means will hereinafter be designated an SIM-card for monitoring an alarm path.

The computer program means 16 may be directly loadable or moveable into the internal memory storage of a digital processing unit 12 within the radio device 10 from the SIM-card inserted in the radio device. However, not all of the program code or coded instructions or data and other information belonging to the alarm path monitoring computer program means are loadable or moveable into the internal memory storage of a digital processing unit. Some of the program code or coded instructions or data and other information for the application are protected on the SIM-card and therefore not moveable or loadable. By protecting some of the program code or coded instructions or data and other information, a user is prevented from copying the alarm path monitoring computer program means from an SIM-card comprising the invented computer program means into a storage of the radio device and than switching SIM-card to an ordinary SIM-card without the alarm path monitoring application. The application will not work because some of the essential program code or coded instructions or data and other information for the application is missing.

As an example, the digital processing unit 12 within the radio device 10 is programmed to perform the step of accessing stored information or instructions within the SIM-card comprising the invented computer program means before a poll is allowed to be sent by the radio device. Another example, the digital processing unit 12 within the radio device 10 is programmed to perform the step of accessing stored information or instructions within the SIM-card comprising the invented computer program means when a poll from an alarm server is received. Such stored essential information or instructions may be special ciphering/deciphering and authentication procedures.

Said invented computer program means 16 may be added to and implemented in a radio device 10 from a subscriber identifying module 14, an SIM-card, and said radio device 10 is capable of handling an alarm signal from an alarm unit 18, 24 and transmit said alarm signal, or an alarm message corresponding to said alarm signal over the alarm path 40. The radio path 40 comprises wireless transmission over a communication connection/link in a system 42 for data and telecommunication. The radio device 10 comprises a computer program means 16 stored on said module 14 as a computer program code and readable by a digital processing unit 12 of said radio device 10, said means 16 comprises coded instructions making it possible for the radio device 10 by means of the digital processing unit 12 to communicate with the alarm server 20 at predetermined time intervals.

The radio device 10 must be capable of handling an alarm signal from an alarm unit 18,24 and transmit said alarm signal or an alarm message corresponding to said alarm signal over an alarm path 40 that comprises wireless transmission over a communication connection/link 40 in a system 42 for data and telecommunication. The alarm signal may either be generated by an alarm unit 18 within the radio device 10 or be generated by an alarm unit 24 outside the radio device.

An alarm unit 18 within the radio device 10 may be implemented as a computer program/software, that is stored as an application either in an internal memory storage, connected with the processing unit 12, or in the subscriber identifying module 14. Both memory devices are readable by the central processing unit 12 of the radio device 10.

If the radio device 10 is connected to an external alarm unit 24, the radio device 10 is equipped with an alarm unit interface (not shown). Said interface may also be implemented as a computer program/ software that is stored as an application, either in an internal memory storage or in the subscriber identifying module.

As mentioned, the radio device 10 comprises a digital processing unit 12 connected to an internal memory storage and a subscriber identity module 14. The digital processing unit 12 is connected to other units of the radio device 10. The processing unit 12 controls all functions, applications and units of the radio device. A user can control the radio device and communicate with the processing unit through a Man-Machine-Interface (MMI). The processor unit is connected to a number of I/O-units (In/Out-units) 22, e.g. keyboard, display, loud speaker, etc. For allowing communication, the radio device comprise a radio antenna 32 that is connected to a receiving unit 26 and a transmitting unit 28, often designed together in a transceiver unit. The central processing unit is often involving a number of sub-processors, a kind of slave processors.

The radio device 10 may be a conventional mobile device, like a mobile phone for making calls or transmitting data over a mobile radio/data telecommunication network 42 comprising base stations 44. It could also be a fixed radio device, that is attached to an object to be surveyed or another suitable object in the surrounding of the surveyed object or surveillance area.

The radio device 10 and a data and telecommunication network 42 establish a radio channel/link 40. The network 42 includes a first ordinary communication path 40 by means of which an radio device is from a communication point of view connected/linked with an alarm server 20 that is connectable to said data and telecommunication network 42. Further, said alarm server 20 is, from a communication point of view, connected/linked to one or more alarm receiving centres 30.

Preferably said communication network 42 includes at least one global network for mobile communication, such as a GSM-network and/or a radio network. Further, said polling is done regularly by means of the ordinary connection/link 40. In the existing GSM-network the polling can be done by means SMS (SMS, Short Message Service), GPRS (GPRS, General Packet Radio Service) or UMTS (UMTS, Universal Mobile Telecommunications System) from an Internet-connected/linked alarm server 20. For instance, at polling by means of SMS, the alarm server 20 transmits an SMS-message via the GSM-network to the alarm unit included in the mobile unit 10. A not coming off poll answer results in that the alarm server 20 transmits an alarm to one or more in advance defined alarm receiving centres 30, at which the alarm receiving centre 30 receives a message about that the connection/link with the mobile unit 10 in question has been broken. The alarm further can be transmitted to a plurality of alarm receiving centres 30 via GSM, pager, fax, Internet-connected/linked PC and WAP-equipment (WAP, Wireless Application Protocol), at which the alarm receiving centre 30 after that can take suitable action.

The alarm server 20 may comprise an SMS-centre server 34, an SMS-Gateway 36 and an STK-server 38. An alarm-receiving server 20 is provided by an alarm operator. The SMS-centre server 34 handles the Short Messages, both incoming (received) and outgoing (transmitted). The SMS-gateway 36 transforms the short messages to a suitable data format/protocol, e.g. HTTP, TCP/IP, SNA, etc. The STK-server 38 handles the SIM Tool Kit (STK) commands that is to be received or transmitted.

One STK command of special interest is the "provide local information"-command. This command orders the radio device 10 to send local information to the SIM 14. This local information consists of:
- the mobile/radio device country code, mobile/radio device network code, location area code and cell identity (ID) of the current serving cell;
- the international mobile station equipment identity (IMEI) of the radio device;
- the network measurement results and the broadcast control channel (BCCH) list;
- the current date, time and time zone.

In one embodiment of the invention, the radio device 10 is arranged to generate position indications by means of a position giving/providing means, which is an implementation utilising the "provide local information"-command.

In further another embodiment, the radio device 10 includes position finding means by means of which the processor 12 by means of the computer program means is arranged to find/appoint the position of the radio device 10. The positioning/position finding may be done by means of base stations 44 existing in the GSM-network 42, by means of GPS or any other navigation system.

The invention also relates to a system, in which the communication between the radio device 10 and the alarm server 20 is not depending on a kept up GSM-connection/link 40. The polls, the acknowledgements and alarm can be transmitted via a second alternative communication path (not shown) by using another operator network to the alarm server 20, which forwards the alarm and/or the position to one or more receivers 30. The alarm server 20 can, for instance, transmit the alarm to an alarm receiving centre 30 via said communication network and the position to another receiver 30 via GSM, pager, fax, WAP-equipment and/or computer, for instance a personal computer, preferably an Internet-connected/linked computer.

In the system according to the invention, further an alarm receiving centre 30 can communicate with the radio device by means of the first GSM-connection/link 40.

The invented method and system are dynamic and may be operated in one of three modes:
- One mode, wherein the radio device receives a polling message from the alarm server and by means of said computer program means responds the polling message within a predetermined time interval by sending a response message over said alarm path to the alarm server;
- A second mode, wherein the radio device by means of said computer program means with a predetermined repetition frequency generates and sends a polling message to the alarm server and within a predetermined time interval receives a response message over said alarm path from the alarm server;
- A third mode, wherein the radio device by means of said computer program means generates and sends a polling message to the alarm server, but at the same time the radio device may receive a polling message generated by the alarm server or by order of said server.

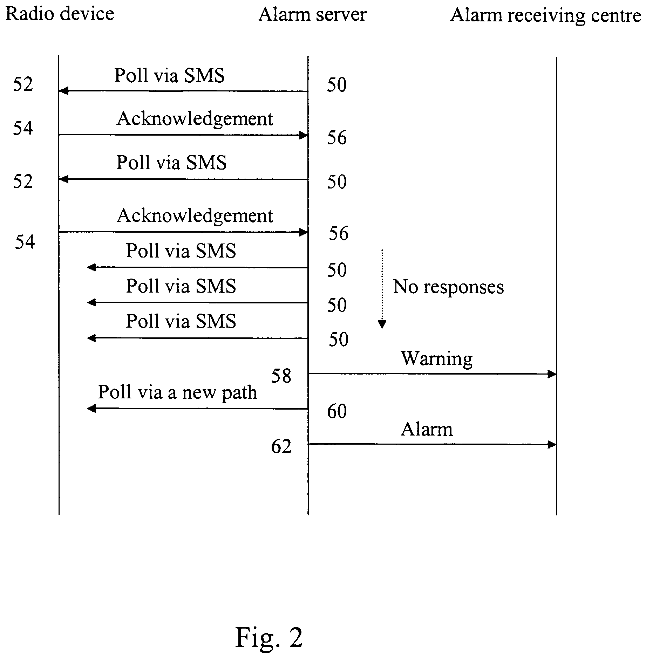

In the following, the different modes of the present invention will be described in more detail by means of figures 2-3.

Figure 2 is a signal/message flowchart illustrating the invented method a system operating in the first mode. Time starts at the top of the diagram. This flowchart shows the function and method steps of an embodiment of the invention, wherein the system starts working in the first mode, which is present when the alarm server 20 polls regularly the radio device 10 for determining if the alarm path 40 is open or broken, the position of the radio device 10 and the status of the alarm unit 18. The first step 50 is that the alarm server sends a poll. The next step 52 is that the radio device and the processing unit by means of the computer program means receives and processes the poll. In the following step, step 54, the computer program means instructs the processor to generate and transmit a open path verification, a so called acknowledgement, that will be received and processed, step 56, by the alarm server. As long as the alarm path is open and not broken or interrupted, the radio device receives regularly with a predetermined polling frequency a polling message and by means of said computer program application responds within a predetermined time interval the polling message by sending a response message over said alarm path to the alarm server. Even though a poll is not responded to, the alarm server will continue to send, step 50, polling messages. When a certain time has passed from the time point when the first poll that was not responded to, or was sent, or a certain number of polls have been sent without any response, the alarm server may either send a warning message, step 58, to one or more in advance defined alarm receiver servers and try to send a poll via a second alternative communication connection/link, step 60, or directly send an alarm to said alarm receiving centre, step 62, at which the alarm receiving centre 30 receives a message informing that the connection/link with the mobile unit 10 in question has been broken.

The alarm server 20 polls regularly the alarm unit regarding the status of the alarm unit 10, which status also may include information that the connection/link 40 between the radio device 10 and the alarm server 20 is intact and/or the status can include, as above mentioned, the found position.

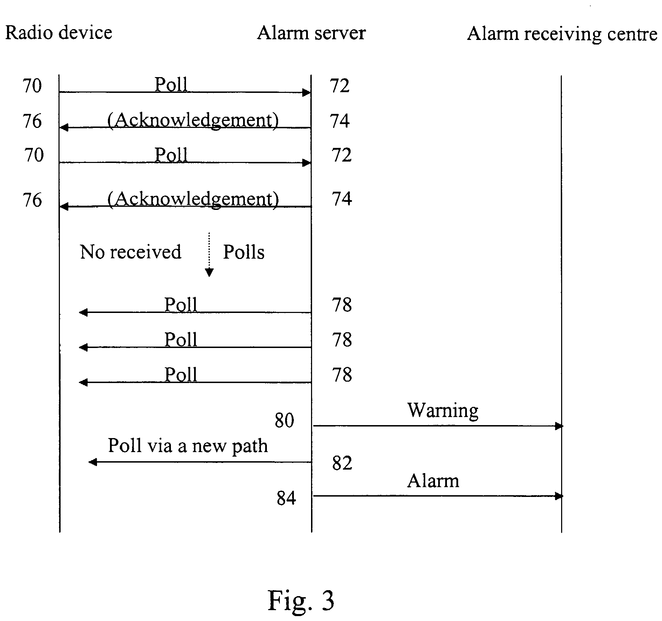

Fig. 3 is a diagram, a signal/message flowchart, illustrating the invented method and system operating in the second mode. Time starts at the top of the diagram. The system will start working in the second mode, wherein the processor unit of the radio device by means of the computer program means generates and sends polling messages, step 70, to the alarm server of the system. The alarm server receives the poll, identifies the mobile unit and registers the information carried by the poll, step 72. The alarm server calculates the expected time of the arrival for the next poll from that mobile unit. If the next poll arrives within a time interval at the expected time, the described measures will be performed. If the radio device by means of said computer program means with a predetermined repetition frequency generates and sends a heartbeat message over said alarm path to the alarm server, the alarm server will not send a response, an acknowledgement, in return to the radio device. Alternatively, as illustrated in figure 3, the alarm server will send a returning acknowledgement for every radio device poll, step 74.

However, if one poll or a number of consecutive mobile generated polls will be missing, the alarm server will make a number of contact attempts by sending a number of alarm server polls to the radio device, step 78. The system will now work in the third mode, wherein the radio device by means of said computer program means generates and sends a polling message to the alarm server, step 50, but at the same time the radio device may receive a polling message generated by the alarm server, step 76, or by order of said server. If there is still no response from the mobile unit, the alarm server will send a warning message to the alarm receiving centre unit, step 80. The alarm server will wait a pre-determined time after the sending of the warning before sending a new alarm server poll over a new link, step 82. If no mobile poll is received within a pre-determined time interval, an alarm message is transmitted to the alarm receiving centre, step 84.

An option is to exclude the acknowledgment and only send heart beats, i.e. signals repeated within short time intervals.

The invention also relates to a SIM-card, a subscriber identifying module, for monitoring an alarm path between a radio device and an alarm server for alarm path monitoring, the radio device being capable of receiving and handling an alarm signal from an alarm unit and transmit said alarm signal or an alarm message corresponding to said alarm signal over the alarm path that comprises wireless transmission over a communication connection/link in a system for data and telecommunication. The SIM-card comprises computer program means for monitoring an alarm path between a radio device and an alarm server stored on the module as a computer program code that is readable by a digital processing unit of the radio device and interacting with the digital processing unit, the computer program means comprises coded instructions making it possible for the radio device by means of the digital processing unit performing the step of communicating open path verifications to the alarm server at predetermined time intervals.

According to one embodiment of the invented SIM-card, the computer program means comprises coded instructions making it possible for the radio device by means of the digital processing unit performing the step of receiving a polling message and by means of the computer program means responding within a predetermined time interval the polling message by sending a response message over the alarm path to the alarm server.

Further according to this embodiment, the computer program means comprises coded instructions making it possible for the radio device by means of the digital processing unit performing the step of receiving a polling message and by means of the computer program means receiving a polling message and by means of the computer program means responding within a predetermined time interval the polling message by sending a SMS over the alarm path to the alarm server.

According to another embodiment of the invented SIM-card, the computer program means comprises coded instructions making it possible for the radio device by means of the digital processing unit performing the step of generating and sending with a predetermined repetition frequency a polling message to the alarm server and within a predetermined time interval receiving a response message over the alarm path from the alarm server.

According to further one embodiment of the invented SIM-card, the computer program means comprises coded instructions making it possible for the radio device by means of the digital processing unit performing the step of generating and sending with a predetermined repetition frequency a heartbeat message over the alarm path to the alarm server. The computer program means may also comprise coded instructions making it possible for the radio device by means of the digital processing unit performing the step of generating and sending with a predetermined repetition frequency an SMS including a heartbeat message over the alarm path to the alarm server.

The computer program means of the invented SIM-card may also comprise coded instructions making it possible for the radio device by means of the digital processing unit performing the step of selecting another network for connection if the used network cannot offer a working alarm path.

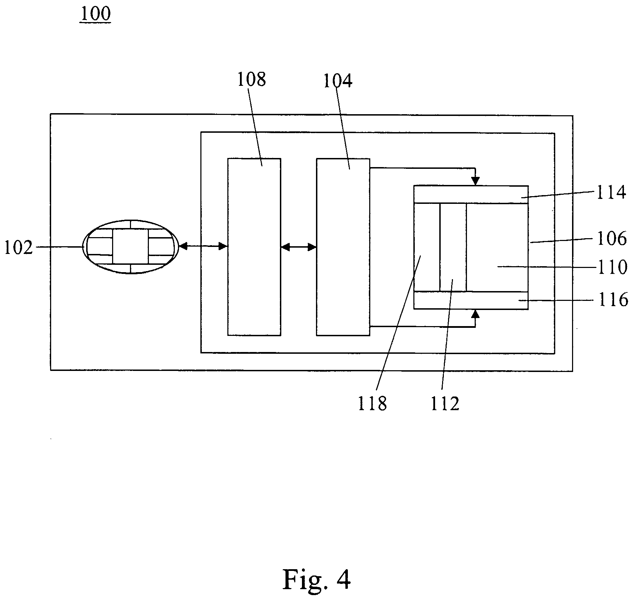

As stated above, it has certain advantages if the computer usable medium is a subscriber identification module (SIM). These advantages will now be explained with reference to fig. 4.

Fig. 4 shows a general architecture of a Subscriber Identity Module (SIM) card 100. In a GSM, GPRS or AMPS system, the SIM card is necessary for making the radio equipment operational. The SIM-card is a microchip, a kind of integrated circuit IC. It needs power suuply and an external clock to work. Power supply and an external clock are provided by a power cell of the radio device, which have some kind of SIM-card holder and contacts adapted for contacting the different sub-contacts of the contact pad 102. The standardisation of this smart card 100 requires a processor 104, memory 106 and an I/O interface 108. The user data, such as phone book and short message (SM), are stored in the electric erasable programmable read only memory (EEPROM) 110. GSM and general smart card features normally reside in the read-only memory (ROM) 112. The memory area also comprise address storage 114, data storage 116 and a Read Access Memory (RAM) 118. Different computer program means, such as applications software, are possible to store and by use of a SIM Toolkit (STK) it is possible for a computer program means 16 on the SIM-card 14, 100 to interact with the radio device 10 in a standardised way. STK is a protocol between the mobile radio equipment and the SIM-card. The protocol makes it possible to reach and combine GSM-features through a user-friendly man-machine interface (MMI). Since the SIM is basically a smart card, services requiring ciphering and certificate calculations may be implemented as STK computer program means. The combination of MMI and security capabilities with data transmission based on short message service (SMS) is an advantage for STK. The key features of STK is: Control of MMI, Call Control, SMS and data handling, and finally, menu and application handling.

Control of MMI contains a set of commands that is used in an interactive communication with the user. Call control provides the feature that outgoing voice and data calls can be started from an STK computer program means. Dialled digit strings, supplementary service data (USSD) strings can first be passed to an STK computer program means before the radio device sets up the call. SMS and data handling provides the feature that a short message (SM) can be sent directly to or from an STK means/application transparently through the radio device. Several commands are used to send data from or download data to an STK application/means. Menu and application handling offers a set of commands that is used to handle the menu selection and application/means control in an STK computer program means/application.

Some of the commands are called proactive SIM commands, meaning that the SIM can initiate actions that will be handled by the radio device, such as display text, sending a short message (SM), setting up a call, etc.

There are commands for MMI (Man-Machine-Interface) control. The command "display text" orders the radio device to display a text string or an icon on the screen. It can, for example, be used in a session where the user receives information about something. With the "get in-key", the SIM orders the radio device to display a text string or an icon on the screen and waits for the user to respond by entering a single character. The command can, for example, be used in an interactive session where an application expects "Yes" or "No" as an answer. Another command "get input" orders the radio device to display a text string or an icon on the screen and wait for the user to respond with a text string.

Other useful commands for the present matter are the SMS and data handling commands. "Send short message" is used by the SIM to order the radio device to send a short message (SM) to the network. The short message (SM) can be used in different services when the SIM wants to communicate with a server. "SMS point-to-point (PP) download" is useful for the operators when maintaining and controlling SIM. It is possible to send data to a specific SIM by using SMS. Hence, an operator can change, activate and deactivate STK applications/means on the SIM by letting the SIM communicate with a server. Yet another useful command is "Timer management". The SIM can manage timers in the radio device. The SIM can order the radio device to start a timer, deactivate a timer or get the current value of the timer. Eight different timers running in parallel can be managed by the SIM and radio device.

The commands in STK are divided into different classes. The GSM specification does not require that a radio device support all commands, but requires that a radio device support all commands within one class. Most manufactures have implemented STK in some of their radio devices. The STK protocol specifies a set of possible MMI features but it does not fully specify how these will be implemented in the radio device. The result of this could be that an STK application/means might appear and even work differently on different radio devices because the screen capabilities and features of the keypad differ. The possibility of implementing a service-specific MMI is an important feature provided by STK. STK-based means/applications can be started from the radio device menu, via an short message (SM) or an event. An application/means can receive user input via the keypad and then present the information interactively on the radio device screen. This attribute is a part of the proactive commands, which means that the radio device MMI can be proactively controlled by an STK application. Regarding server communication, until STK was developed the only data downloaded to a file in the SIM was over the air (OTA). The data download was more complex and lengthy, and the OTA protocol was specific for each provider.

The data transmission in STK services is carried by SMS. With the STK command SMS PP data download (SMS PP-DD), the short message (SM) goes directly to an STK application/means without any interaction with the radio device. As OTA is not a specified standard, SMS PP-DD is thought to be a better solution for OTA services. Therefore, a new protocol called secure messaging, specified in GSM 03.48, has been standardised. The OTA servers commercially available today are normally integrated with, or provide an interface to, other service platforms. OTA can also be used successfully in applications that allow the user to personalise services. The personalisation can be done by the user via a web site or by customer service at a subscriber's request. The use of a web site provides a more cost-effective solution due to the possibility of introducing automatic operation.

Regarding security, several types of security functions have been introduced in GSM to protect the network against fraudulent access and to ensure user privacy. These functions include:
- authentication of the user to prevent access by unregistered users;
- radio path ciphering, in particular, ciphering of all user information to prevent third-party tapping;
- user identity protection to prevent user location disclosure.
There are two algorithms, called A3 and A8, which are used in the ciphering/deciphering and authentication procedures of GSM. They are placed on the SIM cards on the market that also support public key infrastructure (PKI). All these different security features make the security strategy flexible. This is desirable because the implementation of security will be application specific.

Further one STK command of special interest is the "provide local information"-command. This command orders the radio device to send local information to the SIM. This local information consists of:
- the mobile/radio device country code, mobile/radio device network code, location area code and cell identity (ID) of the current serving cell;
- the international mobile station equipment identity (IMEI) of the radio device;
- the network measurement results and the broadcast control channel (BCCH) list;
- the current date, time and time zone.
In one embodiment, the radio device further includes position finding means by means of which the alarm unit is arranged to find/appoint the position of the mobile unit 10. The positioning/position finding is done by means of base stations existing in the GSM-network, by means of GPS or any other navigation system. The alarm unit further is arranged for communication with the alarm server 20 by means of the ordinary GSM-connection/link 2.

In another embodiment of the system according to the present invention, the alarm unit is, from a communication point of view, connected with the alarm server 20 by means of both the first ordinary connection/link 2 and a second alternative communication connection/link 3, which for instance is another GSM-connection/link or any other radio connection/link in a radio system, such as a connection/link by means of communication radio at which the geographical position of the mobile unit 10 is available by means of radio transmission. Preferably the radio system is arranged at strategic places, such as at the frontier crossings of countries and entrances and exits of harbours.

The present invention may be used in a number of applications and technical fields.

Assault alarm and personal alarm installed in a mobile radio terminal provide possibility for the user to alert an alarm receiving centre at an assault attempt or a sudden illness. The alarm will be sent to the alarm receiving centre, which either have geographic position information from the last polling message or acknowledgement message before the alarm and/or get the information from the alarm itself.

The invention is also useful to locate missing people. The mobile radio terminal may be applied to the clothing of a person, for instance a child.

Examples of other fields wherein the invention is very useful are surveillance of mobile units, e.g. vehicles, or fixed installations like vending machines and burglar alarms equipped with radio devices for mobile radio telecommunication. The poll or acknowledgement may involve a report concerning the status of the surveyed object or the surveying alarm application.

As mentioned above, it is an advantage to store the alarm- and monitoring application in the SIM-card as computer program means. The application can be installed in any mobile radio terminal or station available on the market independent of manufacturer or hardware design. There is no need for additional hardware equipment to get the invented application working. Connection interfaces for specific applications of the invention has to be designed by the hardware manufacturer.

The availability and reliability of the invented application is increased, if the SIM-card permit the use of different Public Mobile Land Networks (PLMN) and operators. If one network does not cover a certain area or location, another network and operator permitted by the SIM-card is automatically used.

The present invention is not limited to the above-described preferred embodiments. Various alternatives, modifications and equivalents may be used. Therefore, the above embodiments should not be taken as limiting the scope of the invention, which is defined by the appended claims.

## Claims

1. Method for monitoring an alarm path between a radio device (10) and an alarm server (20) for alarm path monitoring, the radio device (10) having a subscriber identification module, SIM-card, (14) and the radio device (10) being adapted to handle an alarm signal from an alarm unit (18,24) and transmit the alarm signal or an alarm message corresponding to the alarm signal over the alarm path that comprises wireless transmission over a communication connection or communication link (40) in a system (42) for data and telecommunication, ***characterised by*** a step of running a computer program means (16) for monitoring an alarm path between a radio device (10) and an alarm server (20), the computer program means (16) is stored on the subscriber identification module (14) as a computer program code that is readable by a digital processing unit (12) of the radio device (10), the computer program means (16) includes coded instructions making it possible for the radio device (10) by means of the digital processing unit (12) performing a step of communicating open path verifications to the alarm server at predetermined time intervals.

2. The method according to claim 1, **characterised by** the steps that the radio device (10) receives a polling message and by means of the computer program means (16) responds within a predetermined time interval the polling message by sending a response message over the alarm path to the alarm server (20).

3. The method according to claim 2, **characterised by** the step that the radio device (10) receives a polling message and by means of the computer program means (16) responds within a predetermined time interval the polling message by sending a SMS over the alarm path to the alarm server (20).

4. The method according to claim 1, **characterised by** the step that the radio device (10) by means of the computer program means (16) with a predetermined repetition frequency generates and sends a polling message to the alarm server (20) and within a predetermined time interval receives a response message over the alarm path from the alarm server (20).

5. The method according to claim 1, **characterised by** the step that the radio device (10) by means of the computer program means (16) with a predetermined repetition frequency generates and sends a heartbeat message over the alarm path to the alarm server (20).

6. The method according to claim 5, **characterised by** the step that the radio device (10) by means of the computer program means (16) with a predetermined repetition frequency generates and sends a SMS including a heartbeat message over the alarm path to the alarm server (20).

7. The method according to any of the preceding claims, **characterised by** the step of selecting another network for connection if the used network cannot offer a working alarm path.

8. System for monitoring an alarm path between a radio device (10) and an alarm server (20) for alarm path monitoring, the radio device (10) having a subscriber identification module, a SIM-card, (14) and the radio device (10) being adapted to handle an alarm signal from an alarm unit (18,24) and transmit the alarm signal or an alarm message corresponding to the alarm signal over the alarm path that comprises wireless transmission over a communication connection or communication link (40) in a system (42) for data and telecommunication, **characterised in that** the radio device (10) comprises a digital processing unit (12) for running a computer program means (16) for monitoring an alarm path between a radio device (10) and an alarm server (20) stored on the subscriber identification module (40) as a computer program code and readable by the digital processing unit (12), the computer program means (16) includes coded instructions making it possible for the radio device (10) by means of the digital processing unit (12) to communicate open path verifications to the alarm server (20) at predetermined time intervals.

9. The system according to claim 8, **characterised in that** the processing unit (12) of the radio device (10) by means of a computer program means (16) comprises means for receiving a polling message, means for generating an open path verification in form of a response message, or acknowledgement, within a predetermined time interval to the polling message and means for sending the path verification over the alarm path to the alarm server (26).

10. The system according to claim 8, **characterised in that** the computer program means (16) comprises means for generating with a predetermined repetition frequency an open path verification in form of an polling message, means for sending the polling message to the alarm server (26).

11. The system according to claim 9 or 10, **characterised in that** the polling message and response message are transmitted as SMS.

12. The system according to claim 8, **characterised in that** the computer program means (16) comprises means for generating a heartbeat message and the radio device (10) comprises means for sending the heartbeat message with a predetermined repetition frequency over the alarm path to the alarm server.

13. The system according to claim 12, **characterised in that** the computer program means (16) comprises means for generating a SMS including a heartbeat message and the radio device (10) comprises means (28) for sending the SMS including the heartbeat message with a predetermined repetition frequency over the alarm path to the alarm server (20).

14. The system according to any of the preceding claims 8-14, **characterised by** means for selecting another network for connection, if the used network cannot offer a working alarm path.

15. The system according to any of the preceding claims, **characterised by** the system comprises an alarm receiving centre (30), and the alarm server (20) is applied to send an alarm path failure message/warning to the alarm receiving centre (30).

16. Radio device (10) having a subscriber identifying module (14), SIM-card, (14) and the radio device (10) being adapted to handle an alarm signal from an alarm unit (18,24) and transmit the alarm signal or an alarm message corresponding to the alarm signal over the alarm path that comprises wireless transmission over a communication connection or communication link (40) in a system for data and telecommunication, **characterised in that** the radio device (10) comprises a computer program means (16) stored on the subscriber identification module (14) as a computer program code and readable by a digital processing unit (12) of the radio device (10), the means includes coded instructions making it possible for the radio device by means of the digital processing unit (12) for communicating open path verification with the alarm server (20) at predetermined time intervals.

17. A computer program means (16) for monitoring an alarm path between a radio device (10) and an alarm server (20) for alarm path monitoring, the means (16) being directly loadable into the internal memory storage of a digital processing unit (12) within the radio device (10), **characterized in that** the means (16) comprises the software code elements for performing the steps of any claims 1-7.

18. A computer program means (16) that it is stored on a computer usable medium, comprising readable program for causing a digital processing unit (12) in a radio device (12) to control an execution of the steps of any of the claims 1-7.

19. The computer program means (16) according to claim 18, **characterised in that** the computer usable medium is a subscriber identification module (14).

20. A subscriber identification module (14) for monitoring an alarm path between a radio device (10) and an alarm server (20) for alarm path monitoring, the radio device (10) being adapted to handle an alarm signal from an alarm unit (18,24) and transmit the alarm signal or an alarm message corresponding to the alarm signal over the alarm path that comprises wireless transmission over a communication connection or communication link (40) in a system for data and telecommunication, ***characterised in that*** the subscriber identifying module (14) comprises computer program means (16) for monitoring an alarm path between a radio device (10) and an alarm server (20) stored on the subscriber identification module (14) as a computer program code that is readable by a digital processing unit (12) of the radio device (10) and interacting with the digital processing unit (12), the computer program means (16) comprises coded instructions making it possible for the radio device (10) by means of the digital processing unit to perform the step of communicating open path verifications to the alarm server at predetermined time intervals.

21. The subscriber identification module (14) according to claim 20, ***characterised in that*** the computer program means (16) comprises coded instructions making it possible for the radio device (10) by means of the digital processing unit (12) to perform the step of receiving a polling message and by means of the computer program means (16) responding within a predetermined time interval the polling message by sending a response message over the alarm path to the alarm server (20).

22. The subscriber identification module (14) according to claim 21, ***characterised in that*** the computer program means (16) comprises coded instructions making it possible for the radio device (10) by means of the digital processing unit (12) to perform the step of receiving a polling message and by means of the computer program means (16) receiving a polling message and by means of the computer program means (16) responding within a predetermined time interval the polling message by sending a SMS over the alarm path to the alarm server (20).

23. The subscriber identification module (14) according to claim 20, ***characterised in that*** the computer program means comprises coded instructions making it possible for the radio device (10) by means of the digital processing unit (12) to perform the step of generating and sending with a predetermined repetition frequency a polling message to the alarm server and within a predetermined time interval receiving a response message over the alarm path from the alarm server (20).

24. The subscriber identification module (14) according to claim 20, ***characterised in that*** the computer program means (16) comprises coded instructions making it possible for the radio device (10) by means of the digital processing unit (12) to perform the step of generating and sending with a predetermined repetition frequency a heartbeat message over the alarm path to the alarm server (20).

25. The subscriber identification module (14) according to claim 24, ***characterised in that*** the computer program means (16) comprises coded instructions making it possible for the radio device (10) by means of the digital processing unit (12) to perform the step of generating and sending with a predetermined repetition frequency an SMS including a heartbeat message over the alarm path to the alarm server (20).

26. The subscriber identification module (14) according to any of the preceding claims 20-25, ***characterised in that*** the computer program means (16) comprises coded instructions making it possible for the radio device (10) by means of the digital processing unit (12) to perform the step of selecting another network for connection if the used network cannot offer a working alarm path.

## Patentansprüche

1. Verfahren zur Überwachung eines Alarmwegs zwischen einem Funkgerät (10) und einem Alarmserver (20) zur Alarmwegüberwachung, wobei das Funkgerät (10) ein Teilnehmermodul (engl. Subscriber Identification Module), eine SIM-Karte, (14) aufweist und das Funkgerät (10) dazu ausgestaltet ist, ein Alarmsignal von einer Alarmeinheit (18, 24) aufzunehmen und das Alarmsignal oder eine dem Alarmsignal entsprechende Alarmnachricht über den Alarmweg zu übermitteln, der eine kabellose Übermittlung über eine Kommunikationsverbindung oder über einen Kommunikationslink (40) in einem System (42) zur Daten- und Telekommunikation umfasst, durch einen Schritt *gekennzeichnet,* bei dem eine Computerprogrammeinrichtung (16) zur Überwachung eines Alarmwegs zwischen einem Funkgerät (10) und einem Alarmserver (20) betrieben wird, wobei die Computerprogrammeinrichtung (16) auf dem Teilnehmermodul (14) als ein Computerprogrammcode gespeichert ist, der durch eine digitale Verarbeitungseinheit (12) des Funkgeräts (10) lesbar ist, wobei die Computerprogrammeinrichtung (16) verschlüsselte Anweisungen umfasst, die es dem Funkgerät (10) mithilfe der digitalen Verarbeitungseinheit (12) ermöglichen, einen Schritt des Kommunizierens offener Wegverifizierungen dem Alarmserver gegenüber zu vorbestimmten Zeitintervallen durchzuführen.

2. Verfahren nach Anspruch 1, durch die Schritte gekennzeichnet, bei denen das Funkgerät (10) eine Abfragenachricht empfängt und mithilfe der Computerprogrammeinrichtung (16) innerhalb eines vorbestimmten Zeitintervalls auf die Abfragenachricht reagiert, indem es eine Antwortnachricht über den Alarmweg an den Alarmserver (20) sendet.

3. Verfahren nach Anspruch 2, durch den Schritt gekennzeichnet, bei dem das Funkgerät (10) eine Abfragenachricht empfängt und mithilfe der Computerprogrammeinrichtung (16) innerhalb eines vorbestimmten Zeitintervalls auf die Abfragenachricht reagiert, indem es eine SMS über den Alarmweg an den Alarmserver (20) sendet.

4. Verfahren nach Anspruch 1, durch den Schritt gekennzeichnet, bei dem das Funkgerät (10) mithilfe der Computerprogrammeinrichtung (16) mit einer vorbestimmten Wiederholungshäufigkeit eine Abfragenachricht erzeugt und an den Alarmserver (20) sendet, und innerhalb eines vorbestimmten Zeitintervalls eine Antwortnachricht über den Alarmweg vom Alarmserver (20) empfängt.

5. Verfahren nach Anspruch 1, durch den Schritt gekennzeichnet, bei dem das Funkgerät (10) mithilfe der Computerprogrammeinrichtung (16) mit einer vorbestimmten Wiederholungshäufigkeit eine Heartbeat-Nachricht erzeugt und über den Alarmweg an den Alarmserver (20) sendet.

6. Verfahren nach Anspruch 5, durch den Schritt gekennzeichnet, bei dem das Funkgerät (10) mithilfe der Computerprogrammeinrichtung (16) mit einer vorbestimmten Wiederholungshäufigkeit eine SMS einschließlich einer Heartbeat-Nachricht erzeugt und über den Alarmweg an den Alarmserver (20) sendet.

7. Verfahren nach einem der vorangehenden Ansprüche, durch den Schritt gekennzeichnet, bei dem ein anderes Netzwerk zur Verbindung ausgewählt wird, wenn das verwendete Netzwerk keinen funktionierenden Alarmweg bieten kann.

8. System zur Überwachung eines Alarmwegs zwischen einem Funkgerät (10) und einem Alarmserver (20) zur Alarmwegüberwachung, wobei das Funkgerät (10) ein Teilnehmermodul (engl. Subscriber Identification Module), eine SIM-Karte, (14) aufweist und das Funkgerät (10) dazu ausgestaltet ist, ein Alarmsignal von einer Alarmeinheit (18, 24) aufzunehmen und das Alarmsignal oder eine dem Alarmsignal entsprechende Alarmnachricht über den Alarmweg zu übermitteln, der eine kabellose Übermittlung über eine Kommunikationsverbindung oder einen Kommunikationslink (40) in einem System (42) zur Daten- und Telekommunikation umfasst, **dadurch gekennzeichnet, dass** das Funkgerät (10) eine digitale Verarbeitungseinheit (12) zum Betreiben einer Computerprogrammeinrichtung (16) zur Überwachung eines Alarmwegs zwischen einem Funkgerät (10) und einem Alarmserver (20) umfasst, die auf dem Teilnehmermodul (40) als ein Computerprogrammcode gespeichert ist, der durch die digitale Verarbeitungseinheit (12) lesbar ist, wobei die Computerprogrammeinrichtung (16) verschlüsselte Anweisungen umfasst, die es dem Funkgerät (10) mithilfe der digitalen Verarbeitungseinheit (12) ermöglichen, dem Alarmserver (20) gegenüber offene Wegverifizierungen zu vorbestimmten Zeitintervallen zu kommunizieren.

9. System nach Anspruch 8, **dadurch gekennzeichnet, dass** die Verarbeitungseinheit (12) des Funkgeräts (10) mithilfe einer Computerprogrammeinrichtung (16) Mittel zum Empfang einer Abfragenachricht umfasst, Mittel zum Erzeugen einer offenen Wegverifizierung in Form einer Antwortnachricht oder Bestätigung innerhalb eines vorbestimmten Zeitintervalls auf die Abfragenachricht hin, sowie Mittel zum Übersenden der Wegverifizierung über den Alarmweg an den Alarmserver (26).

10. System nach Anspruch 8, **dadurch gekennzeichnet, dass** die Computerprogrammeinrichtung (16) Mittel zum Erzeugen einer offenen Wegverifizierung in Form einer Abfragenachricht mit vorbestimmter Wiederholungshäufigkeit umfasst, Mittel zum Senden der Abfragenachricht an den Alarmserver (26).

11. System nach Anspruch 9 oder 10, **dadurch gekennzeichnet, dass** die Abfragenachricht und die Antwortnachricht als SMS übermittelt werden.

12. System nach Anspruch 8, **dadurch gekennzeichnet, dass** die Computerprogrammeinrichtung (16) Mittel zum Erzeugen einer Heartbeat-Nachricht umfasst und das Funkgerät (10) Mittel zum Senden der Heartbeat-Nachricht mit vorbestimmter Wiederholungshäufigkeit über den Alarmweg an den Alarmserver umfasst.

13. System nach Anspruch 12, **dadurch gekennzeichnet, dass** die Computerprogrammeinrichtung (16) Mittel zum Erzeugen einer SMS einschließlich einer Heartbeat-Nachricht umfasst, und das Funkgerät (10) Mittel (28) zum Senden der SMS einschließlich der Heartbeat-Nachricht mit vorbestimmter Wiederholungshäufigkeit über den Alarmweg an den Alarmserver (20) umfasst.

14. System nach einem der vorangehenden Ansprüche 8-14, durch Mittel zur Auswahl eines anderen Netzwerks zur Verbindung gekennzeichnet, falls das verwendete Netzwerk keinen funktionierenden Alarmweg bieten kann.

15. System nach einem der vorangehenden Ansprüche, **dadurch gekennzeichnet, dass** das System ein Alarmempfangszentrum (30) umfasst und der Alarmserver (20) dazu angewendet wird, eine Alarmweg-Störungsmeldung/Warnung an das Alarmempfangszentrum (30) zu senden.

16. Funkgerät (10) mit einem Teilnehmermodul (14), SIM-Karte, (14), wobei das Funkgerät (10) dazu ausgestaltet ist, ein Alarmsignal von einer Alarmeinheit (18, 24) aufzunehmen und das Alarmsignal oder eine dem Alarmsignal entsprechende Alarmnachricht über den Alarmweg zu übermitteln, der eine kabellose Übermittlung über eine Kommunikationsverbindung oder über einen Kommunikationslink (40) in einem System zur Daten- und Telekommunikation umfasst, **dadurch gekennzeichnet, dass** das Funkgerät (10) eine Computerprogrammeinrichtung (16) umfasst, die auf dem Teilnehmermodul (14) als ein Computerprogrammcode gespeichert ist, der von einer digitalen Verarbeitungseinheit (12) des Funkgeräts (10) lesbar ist, wobei die Einrichtung verschlüsselte Anweisungen umfasst, die es dem Funkgerät mithilfe der digitalen Verarbeitungseinheit (12) ermöglichen, offene Wegverifizierungen dem Alarmserver (20) gegenüber zu vorbestimmten Zeitintervallen durchzuführen.

17. Computerprogrammeinrichtung (16) zur Überwachung eines Alarmwegs zwischen einem Funkgerät (10) und einem Alarmserver (20) zur Alarmwegüberwachung, wobei die Einrichtung (16) direkt in den internen Speicher einer digitalen Verarbeitungseinheit (12) innerhalb des Funkgeräts (10) ladbar ist, **dadurch gekennzeichnet, dass** die Einrichtung (16) die Softwarecodeelemente zur Ausführung der Schritte eines beliebigen der Ansprüche 1-7 umfasst.

18. Computerprogrammeinrichtung (16), die auf einem computerbenutzbaren Medium gespeichert ist und ein lesbares Programm umfasst, um eine digitale Verarbeitungseinheit (12) in einem Funkgerät (12) dazu zu veranlassen, eine Ausführung der Schritte eines beliebigen der Ansprüche 1-7 zu steuern.

19. Computerprogrammeinrichtung (16) nach Anspruch 18, **dadurch gekennzeichnet, dass** das computerbenutzbare Medium ein Teilnehmermodul (14) ist.

20. Teilnehmermodul (14) zur Überwachung eines Alarmwegs zwischen einem Funkgerät (10) und einem Alarmserver (20) zur Alarmwegüberwachung, wobei das Funkgerät (10) dazu ausgestaltet ist, ein Alarmsignal von einer Alarmeinheit (18, 24) aufzunehmen und das Alarmsignal oder eine dem Alarmsignal entsprechende Alarmnachricht über den Alarmweg zu übermitteln, der eine kabellose Übermittlung über eine Kommunikationsverbindung oder über einen Kommunikationslink (40) in einem System zur Daten- und Telekommunikation umfasst, ***dadurch gekennzeichnet, dass*** das Teilnehmermodul (14) eine Computerprogrammeinrichtung (16) zur Überwachung eines Alarmwegs zwischen einem Funkgerät (10) und einem Alarmserver (20) aufweist, die auf dem Teilnehmermodul (14) als ein Computerprogrammcode gespeichert ist, der durch eine digitale Verarbeitungseinheit (12) des Funkgeräts (10) lesbar ist und mit der digitalen Verarbeitungseinheit (12) interagiert, wobei die Computerprogrammeinrichtung (16) verschlüsselte Anweisungen umfasst, die es dem Funkgerät (10) mithilfe der digitalen Verarbeitungseinheit ermöglichen, einen Schritt des Kommunizierens offener Wegverifizierungen dem Alarmserver gegenüber zu vorbestimmten Zeitintervallen durchzuführen.

21. Teilnehmermodul (14) nach Anspruch 20, ***dadurch gekennzeichnet, dass*** die Computerprogrammeinrichtung (16) verschlüsselte Anweisungen umfasst, die es dem Funkgerät (10) mithilfe einer digitalen Verarbeitungseinheit (12) ermöglichen, den Schritt des Empfangens einer Abfragenachricht durchzuführen, und mithilfe der Computerprogrammeinrichtung (16) innerhalb eines vorbestimmten Zeitintervalls auf die Abfragenachricht zu reagieren, indem es eine Antwortnachricht über den Alarmweg an den Alarmserver (20) sendet.

22. Teilnehmermodul (14) nach Anspruch 21, ***dadurch gekennzeichnet, dass*** die Computerprogrammeinrichtung (16) verschlüsselte Anweisungen umfasst, die es dem Funkgerät (10) mithilfe der digitalen Verarbeitungseinheit (12) ermöglichen, den Schritt des Empfangens einer Abfragenachricht durchzuführen, und mithilfe der Computerprogrammeinrichtung (16) eine Abfragenachricht zu empfangen und mithilfe der Computerprogrammeinrichtung (16) innerhalb eines vorbestimmten Zeitintervalls auf die Abfragenachricht zu reagieren, indem es eine SMS über den Alarmweg an den Alarmserver (20) sendet.

23. Teilnehmermodul (14) nach Anspruch 20, ***dadurch gekennzeichnet, dass*** die Computerprogrammeinrichtung verschlüsselte Anweisungen umfasst, die es dem Funkgerät (10) mithilfe der digitalen Verarbeitungseinheit (12) ermöglichen, den Schritt des Erzeugens und Sendens einer Abfragenachricht mit vorbestimmter Wiederholungshäufigkeit an den Alarmserver durchzuführen und innerhalb eines vorbestimmten Zeitintervalls eine Antwortnachricht über den Alarmweg vom Alarmserver (20) zu empfangen.

24. Teilnehmermodul (14) nach Anspruch 20, ***dadurch gekennzeichnet, dass*** die Computerprogrammeinrichtung (16) verschlüsselte Anweisungen umfasst, die es dem Funkgerät (10) mithilfe der digitalen Verarbeitungseinheit (12) ermöglichen, den Schritt des Erzeugens und Sendens einer Heartbeat-Nachricht mit vorbestimmter Wiederholungshäufigkeit über den Alarmweg an den Alarmserver (20) durchzuführen.

25. Teilnehmermodul (14) nach Anspruch 24, ***dadurch gekennzeichnet, dass*** die Computerprogrammeinrichtung (16) verschlüsselte Anweisungen umfasst, die es dem Funkgerät (10) mithilfe der digitalen Verarbeitungseinheit (12) ermöglichen, den Schritt des Erzeugens und Sendens einer SMS einschließlich einer Heartbeat-Nachricht mit vorbestimmter Wiederholungshäufigkeit über den Alarmweg an den Alarmserver (20) zu senden.

26. Teilnehmermodul (14) nach einem der Ansprüche 20-25, ***dadurch gekennzeichnet, dass*** die Computerprogrammeinrichtung (16) verschlüsselte Anweisungen umfasst, die es dem Funkgerät (10) mithilfe der digitalen Verarbeitungseinheit (12) ermöglichen, den Schritt der Auswahl eines anderen Netzwerks zur Verbindung durchzuführen, falls das verwendete Netzwerk keinen funktionierenden Alarmweg bieten kann.

## Revendications

1. Procédé de surveillance d'un chemin d'alarme entre un dispositif radio (10) et un serveur d'alarme (20) pour la surveillance de chemin d'alarme, le dispositif radio (10) ayant un module d'identification d'abonné, carte SIM, (14) et le dispositif radio (10) étant adapté pour traiter un signal d'alarme provenant d'une unité d'alarme (18, 24) et transmettre le signal d'alarme ou un message d'alarme correspondant au signal d'alarme sur le chemin d'alarme qui comprend une transmission sans fil sur une connexion de communication ou une liaison de communication (40) dans un système (42) pour données et télécommunication, **caractérisé par** une étape d'exécution d'un moyen de programme informatique (16) pour surveiller un chemin d'alarme entre un dispositif radio (10) et un serveur d'alarme (20), le moyen de programme informatique (16) est stocké sur le module d'identification d'abonné (14) comme un code de programme informatique qui est lisible par une unité de traitement numérique (12) du dispositif radio (10), le moyen de programme informatique (16) comprend des instructions codées permettant au dispositif radio (10), au moyen de l'unité de traitement numérique (12), d'effectuer une étape de communication de vérifications de chemin ouvert au serveur d'alarme à des intervalles de temps prédéterminés.

2. Procédé selon la revendication 1, **caractérisé par** les étapes dans lesquelles le dispositif radio (10) reçoit un message de sondage et, au moyen du moyen de programme informatique (16), répond dans un intervalle de temps prédéterminé au message de sondage en envoyant un message de réponse sur le chemin d'alarme au serveur d'alarme (20).

3. Procédé selon la revendication 2, **caractérisé par** l'étape dans laquelle le dispositif radio (10) reçoit un message de sondage et, au moyen du moyen de programme informatique (16), répond dans un intervalle de temps prédéterminé au message de sondage en envoyant un SMS sur le chemin d'alarme au serveur d'alarme (20).

4. Procédé selon la revendication 1, **caractérisé par** l'étape dans laquelle le dispositif radio (10), au moyen du moyen de programme informatique (16) avec une fréquence de répétition prédéterminée, génère et envoie un message de sondage au serveur d'alarme (20) et, dans un intervalle de temps prédéterminé, reçoit un message de réponse sur le chemin d'alarme à partir du serveur d'alarme (20).

5. Procédé selon la revendication 1, **caractérisé par** l'étape dans laquelle le dispositif radio (10), au moyen des moyens de programme informatique (16) avec une fréquence de répétition prédéterminée, génère et envoie un message de rythme cardiaque sur le chemin d'alarme au serveur d'alarme (20).

6. Procédé selon la revendication 5, **caractérisé par** l'étape dans laquelle le dispositif radio (10), au moyen des moyens de programme informatique (16) avec une fréquence de répétition prédéterminée, génère et envoie un SMS contenant un message de rythme cardiaque sur le chemin d'alarme au serveur d'alarme (20).

7. Procédé selon l'une quelconque des revendications précédentes, **caractérisé par** l'étape de sélection d'un autre réseau pour la connexion si le réseau utilisé ne peut pas offrir un chemin d'alarme qui fonctionne.

8. Système de surveillance d'un chemin d'alarme entre un dispositif radio (10) et un serveur d'alarme (20) pour la surveillance de chemin d'alarme, le dispositif radio (10) ayant un module d'identification d'abonné, une carte SIM, (14) et le dispositif radio (10) étant adapté pour traiter un signal d'alarme provenant d'une unité d'alarme (18, 24) et transmettre le signal d'alarme ou un message d'alarme correspondant au signal d'alarme sur le chemin d'alarme qui comprend une transmission sans fil sur une connexion de communication ou une liaison de communication (40) dans un système (42) pour données et télécommunication, **caractérisé en ce que** le dispositif radio (10) comprend une unité de traitement numérique (12) pour exécuter un moyen de programme informatique (16) pour surveiller un chemin d'alarme entre un dispositif radio (10) et un serveur d'alarme (20), stocké sur le module d'identification d'abonné (40) comme un code de programme informatique et lisible par l'unité de traitement numérique (12), le moyen de programme informatique (16) comprend des instructions codées permettant au dispositif radio (10), au moyen de l'unité de traitement numérique (12), d'effectuer une étape de communication de vérifications de chemin ouvert au serveur d'alarme (20) à des intervalles de temps prédéterminés.

9. Système selon la revendication 8, **caractérisé en ce que** l'unité de traitement (12) du dispositif radio (10), au moyen d'un moyen de programme informatique (16), comprend des moyens pour recevoir un message de sondage, des moyens pour générer une vérification de chemin ouvert sous la forme d'un message de réponse, ou accusé de réception, dans un intervalle de temps prédéterminé au message de sondage et des moyens pour envoyer la vérification de chemin sur le chemin d'alarme au serveur d'alarme (26).

10. Système selon la revendication 8, **caractérisé en ce que** le moyen de programme informatique (16) comprend des moyens pour générer avec une fréquence de répétition prédéterminée une vérification de chemin ouvert sous la forme d'un message de sondage, des moyens pour envoyer le message de sondage au serveur d'alarme (26).

11. Système selon la revendication 9 ou 10, **caractérisé en ce que** le message de sondage et le message de réponse sont transmis comme SMS.

12. Système selon la revendication 8, **caractérisé en ce que** le moyen de programme informatique (16) comprend des moyens pour générer un message de rythme cardiaque et le dispositif radio (10) comprend des moyens pour envoyer le message de rythme cardiaque avec une fréquence de répétition prédéterminée sur le chemin d'alarme au serveur d'alarme.

13. Système selon la revendication 12, **caractérisé en ce que** le moyen de programme informatique (16) comprend des moyens pour générer un SMS contenant un message de rythme cardiaque et le dispositif radio (10) comprend des moyens (28) pour envoyer le SMS contenant le message de rythme cardiaque avec une fréquence de répétition prédéterminée sur le chemin d'alarme au serveur d'alarme (20).

14. Système selon l'une quelconque des revendications précédentes 8 à 14, **caractérisé par** des moyens pour sélectionner un autre réseau pour la connexion si le réseau utilisé ne peut pas offrir un chemin d'alarme qui fonctionne.

15. Système selon l'une quelconque des revendications précédentes, **caractérisé en ce que** le système comprend un centre de réception d'alarme (30), et le serveur d'alarme (20) est appliqué pour envoyer un message/avertissement de défaillance de chemin d'alarme au centre de réception d'alarme (30).

16. Dispositif radio (10) ayant un module d'identification d'abonné (14), carte SIM, (14) et le dispositif radio (10) étant adapté pour traiter un signal d'alarme provenant d'une unité d'alarme (18, 24) et transmettre le signal d'alarme ou un message d'alarme correspondant au signal d'alarme sur le chemin d'alarme qui comprend une transmission sans fil sur une connexion de communication ou une liaison de communication (40) dans un système pour données et télécommunication, **caractérisé en ce que** le dispositif radio (10) comprend un moyen de programme informatique (16) stocké sur le module d'identification d'abonné (14) comme un code de programme informatique et lisible par une unité de traitement numérique (12) du dispositif radio (10), le moyen comprend des instructions codées permettant au dispositif radio, au moyen de l'unité de traitement numérique (12), d'effectuer une étape de communication de vérifications de chemin ouvert au serveur d'alarme (20) à des intervalles de temps prédéterminés.

17. Moyen de programme informatique (16) pour surveiller un chemin d'alarme entre un dispositif radio (10) et un serveur d'alarme (20) pour la surveillance de chemin d'alarme, le moyen (16) étant directement chargeable dans le stockage de mémoire interne d'une unité de traitement numérique (12) dans le dispositif radio (10), **caractérisé en ce que** le moyen (16) comprend les éléments de code logiciel pour effectuer les étapes de l'une quelconque des revendications 1 à 7.

18. Moyen de programme informatique (16) qui est stocké sur un support utilisable par ordinateur, comprenant un programme lisible pour amener une unité de traitement numérique (12) dans un dispositif radio (12) à commander une exécution des étapes de l'une quelconque des revendications 1 à 7.

19. Moyen de programme informatique (16) selon la revendication 18, **caractérisé en ce que** le support utilisable par ordinateur est un module d'identification d'abonné (14).

20. Module d'identification d'abonné (14) pour surveiller un chemin d'alarme entre un dispositif radio (10) et un serveur d'alarme (20) pour la surveillance de chemin d'alarme, le dispositif radio (10) étant adapté pour traiter un signal d'alarme provenant d'une unité d'alarme (18, 24) et transmettre le signal d'alarme ou un message d'alarme correspondant au signal d'alarme sur le chemin d'alarme qui comprend une transmission sans fil sur une connexion de communication ou une liaison de communication (40) dans un système pour données et télécommunication, **caractérisé en ce que** le module d'identification d'abonné (14) comprend un moyen de programme informatique (16) pour surveiller un chemin d'alarme entre un dispositif radio (10) et un serveur d'alarme (20), stocké sur le module d'identification d'abonné (14) comme un code de programme informatique qui est lisible par une unité de traitement numérique (12) du dispositif radio (10) et interagissant avec l'unité de traitement numérique (12), le moyen de programme informatique (16) comprend des instructions codées permettant au dispositif radio (10), au moyen de l'unité de traitement numérique, d'effectuer l'étape de communication de vérifications de chemin ouvert au serveur d'alarme à des intervalles de temps prédéterminés.

21. Module d'identification d'abonné (14) selon la revendication 20, **caractérisé en ce que** le moyen de programme informatique (16) comprend des instructions codées permettant au dispositif radio (10), au moyen de l'unité de traitement numérique (12), d'effectuer l'étape de réception d'un message de sondage et, au moyen du moyen de programme informatique (16), de réponse dans un intervalle de temps prédéterminé au message de sondage en envoyant un message de réponse sur le chemin d'alarme au serveur d'alarme (20).

22. Module d'identification d'abonné (14) selon la revendication 21, **caractérisé en ce que** le moyen de programme informatique (16) comprend des instructions codées permettant au dispositif radio (10), au moyen de l'unité de traitement numérique (12), d'effectuer l'étape de réception d'un message de sondage et, au moyen du moyen de programme informatique (16), de réponse dans un intervalle de temps prédéterminé au message de sondage en envoyant un SMS sur le chemin d'alarme au serveur d'alarme (20).

23. Module d'identification d'abonné (14) selon la revendication 20, **caractérisé en ce que** le moyen de programme informatique comprend des instructions codées permettant au dispositif radio (10), au moyen de l'unité de traitement numérique (12), d'effectuer l'étape de génération et d'envoi avec une fréquence de répétition prédéterminée d'un message de sondage au serveur d'alarme et, dans un intervalle de temps prédéterminé, de réception d'un message de réponse sur le chemin d'alarme à partir du serveur d'alarme (20).

24. Module d'identification d'abonné (14) selon la revendication 20, **caractérisé en ce que** le moyen de programme informatique (16) comprend des instructions codées permettant au dispositif radio (10), au moyen de l'unité de traitement numérique (12), d'effectuer l'étape de génération et d'envoi avec une fréquence de répétition prédéterminée d'un message de rythme cardiaque sur le chemin d'alarme au serveur d'alarme (20).

25. Module d'identification d'abonné (14) selon la revendication 24, **caractérisé en ce que** le moyen de programme informatique (16) comprend des instructions codées permettant au dispositif radio (10), au moyen de l'unité de traitement numérique (12), d'effectuer l'étape de génération et d'envoi avec une fréquence de répétition prédéterminée d'un SMS contenant un message de rythme cardiaque sur le chemin d'alarme au serveur d'alarme (20).

26. Module d'identification d'abonné (14) selon l'une quelconque des revendications précédentes 20 à 25, **caractérisé en ce que** le moyen de programme informatique (16) comprend des instructions codées permettant au dispositif radio (10), au moyen de l'unité de traitement numérique (12), d'effectuer l'étape de sélection d'un autre réseau pour la connexion si le réseau utilisé ne peut pas offrir un chemin d'alarme qui fonctionne.
